# EUROPEAN PATENT APPLICATION

(11) **EP 2 626 823 A1**
(43) Date of publication of application: **14.08.2013**
(21) Application number: 12154978.6
(22) Date of filing: 10.02.2012
(51) Int. Cl.: G06Q 20/00, H04M 1/725, G06Q 20/32

(54) **Location based selection in mobile wallets**

(71) Applicant: Vodafone Holding GmbH, 40213 Düsseldorf (DE)
(72) Inventor: Abril, Jaime, 41564 Kaarst (DE); Ritzmann, Mark, 40477 Düsseldorf (DE); Strasding, Nikolai, 47809 Krefeld (DE); van der Giessen, Eimert, Woolton Hill RG 209UH (GB)
(74) Representative: Jostarndt, Hans-Dieter

(57) **Abstract**

The invention relates to a mobile terminal device (1), a wallet system (4) and a method suitable to perform NFC based transactions (T) using card applications (22) present on such mobile terminal devices (1) based in geographic locations. The mobile terminal device (1) comprising a near field communication module (11) suitable to perform a NFC based transaction (T) with a corresponding external near field communication reader (21) requesting such transaction (T) and a secure element (12) connected at least to the near field communication module (11) via at least one data connection (13) and adapted to securely execute multiple card applications (22) associated with different card accepting systems (2), where one of the card applications (22) being invoked by the near field communication module (11), and a wallet application (14) executed on a processor of the mobile terminal device (1), where the wallet application (14) is adapted to recognize the geographic location (RGL) of the mobile terminal device (1) independently of any presence of an external near field communication reader (21) and any user interaction and in response to the recognized geographic location (RGL) to automatically select (S) one of the card applications (22) acceptable for the associated card accepting systems (2) at this geographical location (GL) as a default card application (22-D) or in case of multiple card applications (22) applicable at this geographical location to display a list (DAL) of the applicable card applications (22-A) to enable a user (U) of the mobile terminal device (1) to select (SU) one of the displayed card applications (22-A) as the default card application (22-D).

## Description

### Field of the invention

The invention relates to a mobile terminal device, a wallet system and a method suitable to perform NFC based transactions using card applications present on such mobile terminal devices based in geographic locations.

### Background of the invention

With the introduction of near field communication (NFC) to mobile phones, formerly hardware card based services like payment cards, transport tickets, marketing coupons or access granting cards can be migrated to corresponding services provided by the mobile phones. Within the mobile phones such services are implemented on secure chips to protect security relevant parts of the services like keys or confidential algorithms to maintain at least the same security level as present when using e.g. chip cards to provide the corresponding services. When the mobile phone is presented to an external active NFC reader requesting a transaction, the NFC chip of the mobile phone establishes a NFC connection between the mobile phone and the external NFC reader. The card application corresponding to the requested transaction of the external NFC reader allows to execute the requested transaction.

There might be multiple card applications stored on a secure chip, even card applications of the same type (e.g. MasterCard applications). Commonly there is a routing and priority management module implemented within the mobile phone deciding from the incoming transaction request of the external NFC reader which card application needs to be executed in order to perform the requested transaction. In case of more than one applicable card application, the user of the mobile phone can set preferences in a priority list and store the list in the mobile phone. MiFare is one of the applicable NFC protocols used for contactless data transactions and is widely used in contactless smart cards and proximity cards and many millions of reader modules have been sold, e.g. for public transportation systems or security system for access controll to buildings or areas. Mobile phones providing such card application services should be compatible with the MiFare standard. Unfortunately NFC protocols like MiFare putting more management burden to the user. As an example MiFare implementations on mobile phones secure chips only allow one application to be executed at a time. This means, if more than one MiFare based applications are installed (e.g. a company card granting access to the company buildings and a bus ticketing application), the user of the mobile phone needs to actively select the application to be executed before bringing the mobile phone in proximity to the external NFC reader. These settings need to be administrated by the user before executing each transaction leading to an inconvenient amount of required user handlings to use the corresponding services.

Document US 2009/0098825 A1 discloses a method to start a card application based on the location of a mobile terminal device, e.g. a mobile phone, when the mobile terminal is located in the area of a point of sale represented by a NCF reader requesting a transaction. If the user wants to conduct a NFC based transaction with a local point of sale terminal (NFC reader), the user activates the secure element (secure chip) to execute the application and may further select one of the card applications to be executed. The selection might be executed based on the current context / environment of the mobile device in the proximity on the presence of an external near field communication reader, where the context / environment might be based on GPS positioning information. To be able to start a suitable card application, the user still has to activate the security element, which is an additional user handling, which should be avoided to increase the user convenience.

### Summary of the invention

It is an object of the invention to provide a mobile device, a system and a method suitable to executed at least the most common NFC based transactions via card applications associated with card accepting systems even with limited different regional accessibility on the mobile device with minimized required user interactions.

This object is solved by a mobile terminal device comprising a near field communication module suitable to perform a NFC based transaction with a corresponding external near field communication reader and a secure element coupled at least to the near field communication module and adapted to securely execute multiple card applications associated with different card accepting systems, where one of the card applications being invoked by the near field communication module, and a wallet application executable on the mobile terminal device, where the wallet application is adapted to recognize the geographic location of the mobile terminal device independently of any presence of an external near field communication reader and any user interaction and in response to the recognized geographic location to select one of the card applications acceptable for the associated card accepting systems at this geographical location as a default card application or in case of at least two of the multiple card applications applicable at this geographical location to display a list of the applicable card applications to enable a user of the mobile terminal device to select one of the displayed card applications as the default card application. The mobile device is able to execute at least the most common NFC based transactions like MiFare via card applications associated with different regional limited card accepting systems on the mobile device with minimized required user interactions to maximize the user convenience.

A card application denotes a software application, which enables the performance of a transaction in communication with a near field communication reader (NFC reader) present at a so-called point-of-transaction by providing the required transaction related data to the near field communication reader connected to the card accepting system. A point-of transaction could be for example a point-of-sale to receive a product or ticket or a point-of-access to enter a building or a certain area. A transaction denotes a data exchange between the mobile terminal device and the NFC reader requesting such transaction, which leads to the execution of a transaction action. Such transaction action might be to debit of a banking account of the user after the user bought a product or might be the opening of a door after the access is granted to the user or might be providing a service to the user after ordering the service via the card application. Another example is an electronic ticketing transaction, in which an electronic ticket is provided by the mobile device and validated by the NFC terminal. Transaction related data could be for example banking account data, user identification data, transaction identification data etc. A card application is the counterpart to common plastic cards comprising sensitive transaction data of the user used for transactions in combination with a card reading device. The corresponding card accepting system denotes a system operated by a company providing services or products to users and accepting identification cards, e.g. for cashless payments or for granting access to users. Several card accepting systems have an access area, which is limited to certain geographic regions, e.g. local transportation systems selling bus or train tickets via NFC terminals located at the corresponding bus stops or train stations or located inside the busses and trains. Other card accepting systems may operate worldwide, but operate NFC terminals only at certain locations.

The mobile terminal device might be any portable devices enabling a data exchange at least with a NFC reader and comprising a secure element. Mobile terminal devices for example are cellular phones or PDAs. However the present invention is not limited to these examples. A mobile terminal device according to the present invention comprises at least one data processor, at least one display element suitable to display a list of card application to select one card application and a user interface to insert a selection. Such user interface might be a keyboard or a touch sensitive display.

The near field communication module denotes a module suitable to establish a communication interface for wireless short range communication with a terminal. The NFC technology is specified in ISO 18092 and 21481, ECMA 340.352 and 356, and ETSI TS 102 109 and allows contactless communication between devices (e.g. mobile terminal device and a NFC reader) over a short distance of about 10 to 30 centimeters. Near field communication modules comprise an NFC controller with a micro processor and memory and a magnetic loop antenna operating at a frequency of 13.56 MHz. The NFC controller controls the antenna on a physical level. On an application level the execution of transactions is controlled by NFC applications (the card applications) which are executed in the secure element connected to the NFC controller. Since the execution of transactions, such as financial transactions or ticketing transactions, usually involves sensitive data, the secure element provides a security architecture preventing unauthorized third parties from accessing the sensitive data. Transactions are usually executed by passing the NFC capable device (the mobile terminal device) over an NFC enabled terminal (NFC reader). This means that usually only a very short time is available for the execution of a transaction. For this reason, the secure element should be connected to the NFC controller in such a way that a sufficiently fast communication between the secure element and the NFC controller is possible, where the card application on the secure element is invoked by NFC controller of the near field communication module. In order to achieve this, special interfaces between the NFC controller and the secure element have been developed. One such interface is the SWP interface specified by the ETSI (SWP: Single Wire Protocol).

The secure element is adapted to execute one or more card applications. The secure element provides a secure and tamperproof environment for security executing applications handling sensitive data, e.g. managing data of monetary value or security relevant data. The coupling of the secure element at least to the near field communication module might be established via at least one data connection. In an embodiment the secure element comprises a storage memory to store the card applications and a processor to execute the card applications. Here the card applications are hosted by the secure element providing a faster access and execution compared to solutions, where the card applications are stored in a data storage module outside the secure element. In the latter case, additional measures have to be implemented to provide a secure and tamperproof environment such as a secure data connection between secure element and data storage module outside the secure element. Such a data storage module might be a computer chip with protected access. In a preferred embodiment the secure element is a smartcard, a SIM card, a SD-card, or an embedded secure smart chip, which comprise the required components not only to execute the card applications but also to securely host the card applications. In an preferred embodiment the default list of card applications is stored on the secure element to minimize the access time to receive the information which card application is selected as the default application. A short time to receive the information which card application is selected as the default application is necessary, because transactions are usually executed by passing the NFC capable device (the mobile terminal device) over an NFC enabled terminal (NFC reader). This means that usually only a very short time is available for the execution of a transaction. Therefore each step to be performed within the NFC transaction should require only a short process time.

A smartcard (or chip card, integrated circuit card), is any pocket-sized card with embedded integrated circuits (embedded secure smart chip). A smartcard (or microprocessor card) contains volatile memory and microprocessor components. The benefits of smartcards are directly related to the volume of information and applications that are programmed for use on a card. A single contact/contactless smart card can be programmed with multiple banking credentials, medical entitlement, driver's license/public transport entitlement, loyalty programs and club memberships to name just a few. Multi-factor and proximity authentication can and has been embedded into smartcards to increase the security of all services on the card. For example, a smartcard can be programmed to only allow a contactless transaction (like NFC transactions) if it is also within range of another device. This can significantly increase the security of the smart card.

A SD-card (secure digital card) is a non-volatile memory card format developed for use in portable devices. SD card may have different sizes, also mini-SD-cards and Micro-SD-card are available. Smaller cards are usable in larger slots through use of a passive adapter. The SD high capacity (SDHC) format even supports cards with capacities up to 32 GB. A host device (mobile terminal device) can lock an SD card using a password of up to 16 bytes, typically supplied by the user. A locked card interacts normally with the host device except that it rejects commands to read and write data. A locked card can be unlocked only by providing the same password. The host device can, after supplying the old password, specify a new password or disable locking. Without the password (typically, in the case that the user forgets the password), the host device can command the card to erase all the data on the card for future re-use (except card data under DRM), but there is no way to gain access to the existing data. All SD cards incorporate a digital rights management (DRM) scheme. Roughly 10% of the storage capacity of an SD card is not available to the user, but is used by the on-card processor to verify the identity of an application program that it will then allow to read protected content. The card prohibits other accesses, such as users trying to make copies of protected files.

A subscriber identity module or subscriber identification module (SIM) is an integrated circuit that securely stores the International Mobile Subscriber Identity (IMSI) and the related key used to identify and authenticate subscribers on mobile telephony devices (such as mobile phones and computers). A SIM is embedded into a removable SIM card, which can be transferred between different mobile devices. SIM cards were first made the same size as a credit card (85.60 mm x 53.98 mm x 0.76 mm). The development of physically-smaller mobile devices prompted the development of a smaller SIM card, the mini-SIM card. Mini-SIM cards have the same thickness as full-size cards, but their length and width are reduced to 25 mm x 15 mm. A SIM card contains its unique serial number (ICCID), internationally unique number of the mobile user (IMSI), security authentication and chipering information, temporary information related to the local network, a list of the services the user has access to and two passwords: a personal identification number (PIN) for ordinary use and a personal unblocking code (PUK) for PIN unlocking. The use of SIM cards is mandatory in GSM devices. GSM (Global System for Mobile Communications) is a standard set to describe technologies for digital cellular networks. The equivalent of a SIM in UMTS is called the Universal Integrated Circuit Card (UICC), which runs a USIM application. The UICC is still colloquially called a SIM card.

The UICC (Universal Integrated Circuit Card) is the smartcard used in mobile terminal devices in GSM and UMTS networks. The UICC ensures the integrity and security of all kinds of personal data, and it typically holds a few hundred kilobytes. With the advent of more services, the storage space will need to be larger. The UICC smart card consists of a CPU, ROM, RAM, EEPROM and I/O circuits. Early versions consisted of the whole full-size (85 x 54 mm, ISO/IEC 7810 ID-1) smart card. Soon the race for smaller telephones called for a smaller version of the card. The card was cropped down to 25 x 15 mm (ISO/IEC 7810 ID-000), as illustrated. The use and content of the card can be protected by use of PIN codes. One code, PIN1, can be defined to control normal use of the phone. Another code, PIN2, can be set, to allow the use of special functions (like limiting outbound telephone calls to a list of numbers). PUK1 and PUK2 is used to reset PIN1 and PIN2 respectively.

The wallet application is a software application implemented on the mobile terminal device, e.g. on a processor of the mobile terminal device. To be able to recognize the geographic location of the mobile terminal device, the wallet application receives location relevant data, from which the geographic location is derived or receives the geographic location from a connected positioning module. Such data might be cell-ID data from a mobile communication network comprising multiple network cells operating in certain geographic areas. In other embodiments, the wallet application is connected to a satellite positioning module receiving satellite based geographic location data from a satellite positioning system. Suitable satellite positioning systems are the Global Positioning System (GPS), the Russian GLONASS system, the Chinese Beidou navigation system or the European Union Galileo positioning system. The wallet application is adapted to select one of the card applications acceptable for the associated card accepting systems at this geographical location as a default card application independently of any presence of a external near field communication reader. To be able to correlate the recognized geographic location to the area, where a card application is applicable, the wallet application has access to a database storing such correlation between card application and applicable area for this card application. This database might be part of the mobile terminal device or might be accessible as external database. In case of multiple card applications applicable at this geographical location to display a list of the applicable card applications on a display of the mobile terminal device to enable a user of the mobile terminal device to select one of the displayed card applications as the default card application independently of any presence of a external near field communication reader, e.g. via the display as a touch sensitive display.

The default selecting may take place without any user interaction in the most cases, because in the most areas only one card application is applicable. The user even does not need to start the secure element or the mobile terminal device when approaching a NFC reader requesting a transaction. The user only has to hold the mobile terminal device in a suitable proximity to the NFC reader and the transaction is performed, because the wallet application defaulted the right card application to the NFC module and secure element in beforehand to start the card application without the need of any further handling steps by the user. Only in case of more than one applicable card application, the user is requested to select the desired card application, where the pre-selection of applicable card application is done without any required user interaction in beforehand. To default the card application, no proximity of any NFC reader is required meaning that no input via the NFC module is required to default a card application in dependence of the geographic location of the mobile terminal device leading to a great user convenience.

In an embodiment the near field communication module is adapted to invoke the default card application on the secure element in case of an active near field communication reader being in proximity of the mobile terminal device according to the default selection. No transaction related user handling is required to execute the corresponding transaction even when the mobile terminal devices is travelling between different geographic areas

In another embodiment the mobile terminal comprises a telecommunication module to establish a wireless connection to a backend system with a database comprising information about the usability of card applications at a certain geographic location, and the wallet application is adapted to send a query to the database in response to the recognized geographic location to receive information about the usability of card applications at the recognized geographic location. The received data enable an accurate and up-to-date decision, which card application has to be selected as the default card application, since the database as a central database can be maintained and updated easier as corresponding data stored on each mobile terminal device. In order to have fast access to this database, the mobile terminal device communicates with the backend system comprising the database via a wireless communication network. Since the secure element might be present as SIM card, the required data to access the wireless communication network is already present in the mobile terminal device. The backend system might be any system providing access via a wireless communication network, e.g. a WLAN network or a cellular phone network.

In a preferred embodiment the query comprises information about the card application present on the secure element to reduce the amount of data to be checked at the database and data sent back to the mobile terminal device from the backend system.

In another embodiment the query is sent only in response of recognizing a change of the geographic location with respect to the recognized geographic location, where the previous query is sent. If the mobile terminal device does not change its location, or the change is below a certain distance, which might be inserted as a distance threshold, the query would result in the same transmitted data as already received from the previous query. Such non necessary data transfer can be avoided.

In another embodiment starting of the wallet application, triggers sending out the query after recognizing the geographical position. During the time, where the wallet application is switched off, the mobile terminal device might be moved over a significant distance or the database comprising data correlating card applications and geographic areas was updated during the switching-off time and therefore might provide different data compared to the data received from the previous query.

In another embodiment each of the card applications is associated with at least a payment systems, credit card systems, booking systems, or access systems as the card accepting systems.

The invention further relates to a wallet system to perform a NFC based transaction comprising a mobile terminal device as claimed in the present invention and a backend system comprising a database comprising information about the usability of card applications at a certain geographic location, where the mobile terminal device comprises a telecommunication module to establish a wireless connection to the backend system, and the wallet application is adapted so send a query to the database in response to the recognized geographic location to receive information about the usability of card applications at the recognized geographic location. The received data enable an accurate and up-to-date decision, which card application has to select as the default card application, since the database as a central database can be maintained and updated easier as corresponding data stored on each mobile terminal device. In order to have fast access to this database, the mobile terminal device communicates with the backend system comprising the database via a wireless communication network. Since the secure element might be present as SIM card, the required data to access the wireless communication network is already present in the mobile terminal device. The backend system might be any system providing access via a wireless communication network, e.g. a WLAN network or a cellular phone network. The information may contain geographical positions, where the NFC terminals are arranged or may define an area, where users have to be inside this area to be able to use the corresponding card application. The area may define a certain range around the NFC terminal or may define an area of a town or around a town, where a card application can be applied, e.g. the area of a public transportation system for receiving corresponding transportation ticket or the area of a company in case of card applications granting access to this company area. As an example, the database may comprise one or more data sets comprising data identifying the card accepting system is associated with data identifying one or more card applications and data defining one or more areas, where the corresponding card applications is applicable to perform a transaction using this card applications via an NFC connection between the mobile terminal device and a corresponding NFC terminal (NFC reader). The areas may differ in size depending on the information provided to the backend system by the card accepting systems in order to enable the use of its card applications. The areas might be defined by geographic coordination and a query module arranged in the backend system compares the geographical location recognized by the wallet application with the defined areas stored in the database and decides, whether the recognized geographical location is inside any of the defined areas. People skilled in the art are able to provide such query module executing the comparison of the geographic data. The applicable card applications are derived from this comparison and subsequently communicated to the wallet application of the mobile terminal device.

In an embodiment of the wallet system it further comprising a wallet server to register applicable card applications and being connected to the database in order to provide card application data to the database comprising a correlation between card application and a geographical area, where the card application is accepted by the associated card accepting systems. The wallet server is used to register the applicable card applications for use in the mobile terminal device. As an example the secure element might be arranged as a SIM card also used to establish the connection to a wireless network. The SIM card therefore is issued by the network provider containing security relevant network parameter. Therefore only card applications registered on the wallet server are allowed to be installed on the SIM card for execution to perform a transaction according to the present invention. The same holds correspondingly for secure elements arranged on other security relevant components of a mobile terminal device. In an embodiment the card accepting system register their card application(s) to be applied in NFC transactions on the wallet server of e.g. a network provider to operate the mobile terminal device in a wireless network, e.g. a mobile communication network for cellular phones. The wallet server allows the card application systems to install their card applications on the secure elements (e.g. SIM cards) provided by the provider operating the wallet server. The card applications are subsequently pushed onto the secure element by a trusted provider receiving the card applications from one or more card accepting system in case of being requested by the user of the mobile terminal device asking for installation of the card applications on his mobile terminal device. The wallet server furthermore provides information (card application data) to the database of the backend system about the area, in which the corresponding card applications might be applied for executing a transaction via an NFC connection with a corresponding NFC terminal (NFC reader). The card application data may contain geographical positions, where the NFC terminals are arranged or may define an area, where users have to be inside this area to be able to use the corresponding card application. The area may define a certain range around the NFC terminal or may define an area of a town or around a town, where a card application can be applied, e.g. the area of a public transportation system for receiving corresponding transportation ticket or the area of a company in case of card applications granting access to this company area.

Furthermore the wallet application might be transmitted to the mobile terminal device from a wallet server in order to be installed on the mobile terminal device for first use. In this case, the wallet server easily transfers information about the card application installed on the mobile terminal device to the wallet application, because the card applications to be installed are already registered on the wallet server. In an embodiment, the wallet server may transmit this information as part of the installation procedure of the wallet application on the mobile terminal device. Therefore the query sent out by the mobile terminal device in response to the recognized geographical position can be limited to the card applications installed on the mobile terminal device.

The invention further relates to a method to perform a NFC based transaction via card applications applicable for card accepting systems executed on a secure element in a mobile terminal device as claimed in the present invention comprising the steps of
- Recognizing the geographic location of the mobile terminal device by a wallet application executed on a processor of the mobile terminal device independently of any presence of an external near field communication reader and any user interaction,
- in response to the recognized geographic location selecting one of the card applications applicable for the card accepting systems present at this geographical location as a default card application, or
- in case of at least two of the multiple card applications applicable at this geographical location displaying a list of the applicable card applications and selecting one of the displayed card applications as the default card application by a user of the mobile terminal device,
- invoking the default card application by a near field communication module of the mobile terminal device coupled to the secure element, and
- executing the invoked default card application on the secure element enabling the near field communication module to perform a transaction with a corresponding external near field communication reader requesting the transaction.

In an embodiment the method further comprises the step of invoking the default card application on the secure element according the default selection by the wallet application is executed in case of an active near field communication reader being in proximity of the mobile terminal device

In another embodiment the method further comprises the steps of
- establishing a wireless connection to a backend system with a database comprising information about the usability of card applications at a certain geographic location,
- sending a query to the database by the wallet application in response to the recognized geographic location to receive information about the usability of card applications at the recognized geographic location, and
- receiving information about the usability of card applications at the recognized geographic location from the backend system, and
- using the received information to select one of the card applications as the default application.

In another embodiment the query is sent in response of recognizing a change of the geographic location with respect to the recognized geographic location, where the previous query is sent, or starting of the wallet application triggers sending out the query after recognizing the geographical position.

In another embodiment the wallet application is transmitted to the mobile terminal device from a wallet server arranged in the backend system comprising a registration of card applications being applicable at the mobile terminal.

### Brief description of the drawings

These and other aspects of the invention will be apparent from and elucidated with reference to the embodiments described hereinafter.
- Fig.1:: mobile terminal device according to an embodiment of the present invention.
- Fig.2:: wallet system according to an embodiment of the present invention.
- Fig.3:: method steps according to an embodiment of the present invention to operate the mobile terminal device as shown in fig.1.
- Fig.4:: method steps according to another embodiment of the present invention to operate the mobile terminal device in a wallet system as shown in fig.2.
- Fig.5:: an embodiment of the present invention to register and install card applications and wallet application on a mobile terminal device as shown in fig.1.
- Fig.6:: example of defaulting card applications in different areas with different applicable card applications in accordance to the present invention.

### Detailed description of embodiments

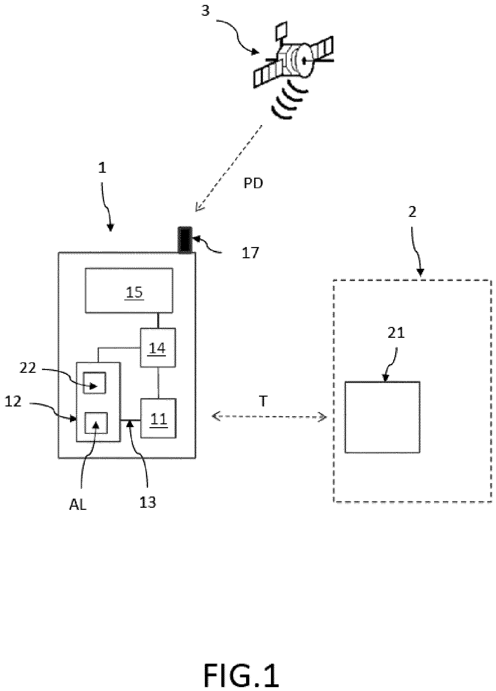

Fig.1 shows a mobile terminal device 1 according to an embodiment of the present invention. The mobile terminal device 1 comprises a near field communication module 11 suitable to perform a NFC based transaction T with a corresponding external near field communication reader 21, a secure element 12 coupled at least to the near field communication module 11, e.g. via at least one data connection 13, and adapted to securely execute multiple card applications 22 associated with different card accepting systems 2, where one of the card applications 22 being invoked by the near field communication module 11, and a wallet application 14 executable on the mobile terminal device 1, e.g. on a processor of the mobile terminal device. The wallet application 14 is adapted to recognize the geographic location RGL of the mobile terminal device 1 independently of any presence of an external near field communication reader 21 and any user interaction in accordance to positioning data PD received e.g. from a satellite based positioning system 3. In response to the recognized geographic location RGL the wallet application 14 automatically selects S one of the card applications 22 acceptable for the associated card accepting systems 2 at this geographical location GL as a default card application 22-D or in case of at least two of the multiple card applications 22 applicable at this geographical location to display a list DAL of the applicable card applications 22-A in a display 15 of the mobile terminal device to enable a user U of the mobile terminal device 1 to select SU one of the displayed card applications 22-A as the default card application 22-D. The user interface to insert the user selection might be a keyboard or a touch sensitive display 15. In this embodiment, the secure element 12 is a SIM card and comprises a storage memory to store the card applications 22 and a processor to execute the card applications 22. In other embodiment the secure element 12 might be a smartcard, a Universal Integrated Circuit Card, or a SD-card. The near field communication module 11 is adapted to invoke IN the default card application 22-D on the secure element 12 coupled to the near field communication module 11 according to the default selection via the data connection 13, preferably in case of an active near field communication reader 21 being in proximity PR of the mobile terminal device 1 requesting the transaction.

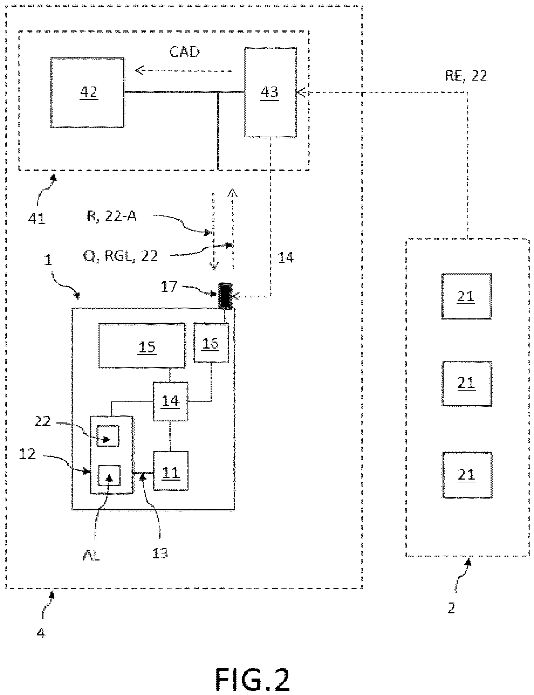

Fig.2 shows wallet system 4 according to an embodiment of the present invention comprising at least one a mobile terminal device 1 and a backend system 41 comprising a database 42 comprising information about the usability UCA of card applications 22-A at a certain geographic location GL. The mobile terminal 1 comprises a telecommunication module 16 to establish a wireless connection EWC to the backend system 41 with the database. The wallet application 14 is adapted so send a query Q to the database 42 in response to the recognized geographic location RGL to receive R information about the usability UCA of card applications 22-A at the recognized geographic location RGL. The query Q may comprise information about the card application 22 present on the secure element 12. The wallet system 4 further comprising a wallet server 43 arranged in the backend system 41 to register RE card applications 22 applicable to one or more NFC card readers 21 of one or more card accepting systems 2 and being connected to the database 42 in order to provide card application data CAD to the database 42 comprising a correlation between card application 22 and a geographical area, where the card application 22 is accepted by the associated card accepting systems 2. Each of the card application 22 is associated with at least a payment systems, credit card systems, booking systems, or access systems as the card accepting systems 2.

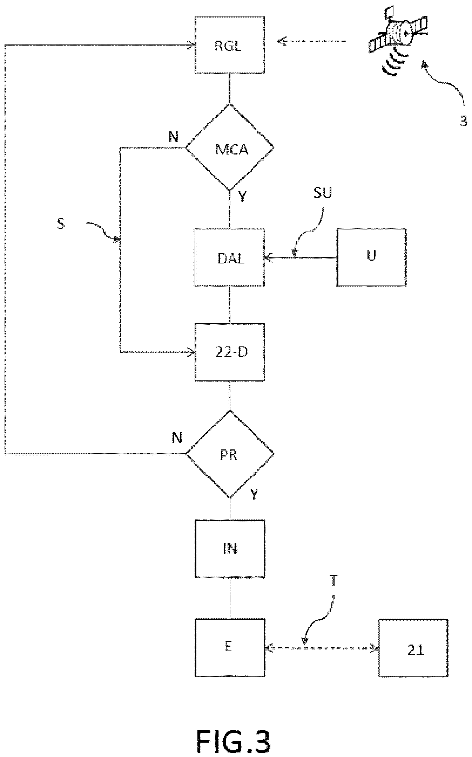

Fig.3 shows an embodiment of the method to perform a NFC based transaction via card applications 22 applicable for card accepting systems 2 executed on a secure element 12 in a mobile terminal device 1 as shown in Fig.1. In a first step, the current geographic location of the mobile terminal device 1 is recognized RGL by the wallet application 14 independently of any presence of an external near field communication reader 21 and any user interaction. In response to the recognized geographic location RGL one of the card applications 22 applicable for the card accepting systems 2 present at this geographical location GL automatically selecting S as a default card application 22-D, if only one card application is applicable (answer "N" to question "are multiple card applications applicable"). In case of multiple card applications 22-A applicable at this recognized geographical location RGL (answer "Y" to question "are multiple card applications applicable") a list of the applicable card applications 22-A is displayed DAL in the display 15. The user U selects SU one of the displayed card applications 22-A as the default card application 22-D of the mobile terminal device 1. After the default card application 22-D is defined, the default card application 22-D will be invoked IN by the near field communication module 11 connected to the secure element 12 via at least one data connection 13, preferably in case of an active near field communication reader 21 being in proximity PR of the mobile terminal device 1 according to the default selection. Therefore the proximity PR is checked. In case of no NFC reader being in proximity to the mobile terminal device, the method continues with the first step of recognizing the current geographical location followed by the previously described method steps. After invoking the default card applications 22-D is executed E on the secure element 12 enabling the near field communication module 11 to perform a transaction T with a corresponding external near field communication reader 21 being in proximity to the mobile terminal device 1 and requesting such transaction T.

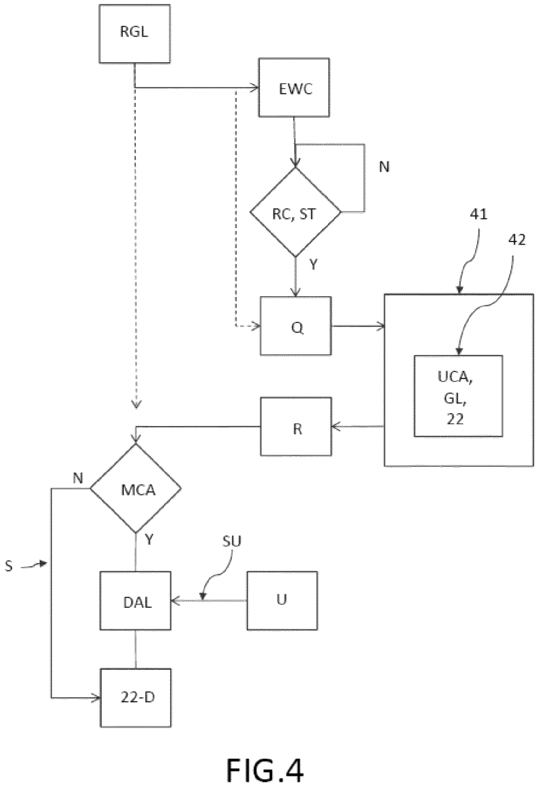

Fig.4 shows another embodiment of the method to operate the mobile terminal device in a wallet system as shown fig.2. The method shown in Fig.4 comprises additional method steps between the method steps "RGL" and "MCA" as shown in fig.3. The additionally performed method steps are establish of a wireless connection EWC to a backend system 41 of a wallet system 4 with a database 42 comprising information about the usability UCA of card applications 22 at a certain geographic location GL, where a query Q is sent to the database 42 by the wallet application 14 in response to the recognized geographic location RGL to receive R information about the usability UCA of card applications 22-A at the recognized geographic location RGL, and in response to the query, the mobile terminal device receives R information about the usability UCA of card applications 22-A at the recognized geographic location RGL from the backend system 4 via the same wireless connection used for sending out the query. The received information is subsequently used to select S, SU one of the card applications 22 as the default application 22-D. Here the query Q might be send-out periodically (indicated by the dashed arrow) or ion other embodiments in response of recognizing a change RC of the geographic location with respect to the recognized geographic location RGL of the geographic location of the previous query Q-s, or starting ST of the wallet application 14 triggers sending out the query Q after recognizing the current geographical position RGL.

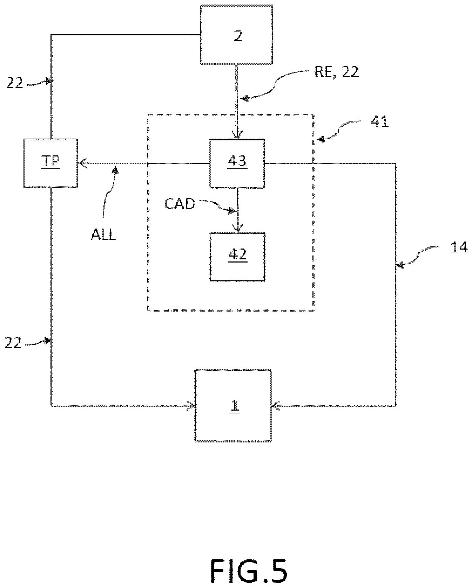

Fig.5 shows an embodiment of the present invention to register and install card applications and wallet application on a mobile terminal device as shown in fig.1. The card applications 22 to be applied are registered RE on the wallet server 43 of the backend system 41 by a card accepting system 2. The wallet server 43 allows to be installed the card applications 22 on the secure element 12 (e.g. a SIM card) by sending a corresponding allowance notification ALL to a trusted provider TP foreseen to provide the card applications 22 to the mobile terminal device 1 for installation. The card accepting system 2 register2 their card application(s) 22 to be applied in NFC transactions T on the wallet server 43 of e.g. a network provider to operate the mobile terminal device 1 in a wireless network, e.g. a mobile communication network for cellular phones. After the allowance ALL has been granted to the trusted provider TP, the card applications 22 are subsequently pushed onto the secure element 12 of the mobile terminal device 1 by a trusted provider TP receiving the card applications 22 from one or more card accepting system 2 in case of being previously requested by the user of the mobile terminal device 1 asking for installation of the card applications 22 on his mobile terminal device 1. The user request might be sent to the card accepting service or to the backend system 41 of the wallet system 4. The wallet server 43 furthermore provides information (card application data CAD) to the database 42 of the backend system 41 about the area, in which the corresponding card applications 22 might be applied for executing a transaction T via an NFC connection with a corresponding NFC terminal (NFC reader). The card application data CAD may contain geographical positions, where the NFC terminals are arranged or may define an area, where users U have to be inside this area to be able to use the corresponding card application 22. The area may define a certain range around the NFC terminal or may define an area of a town or around a town, where a card application 22 can be applied, e.g. the area of a public transportation system for receiving corresponding transportation ticket or the area of a company in case of card applications 22 granting access to this company area. In this embodiment the wallet application 14 is transmitted to the mobile terminal device 1 from a wallet server 43 in order to be installed on the mobile terminal device 1 for first use. In this case the wallet server 43 easily transfers information about the card application (card application data CAD) as present in the database 42 to the wallet application 14, because the card applications 22 to be installed are already registered RE on the wallet server 43. In an embodiment, the wallet server 43 may transmit this information as part of the installation procedure of the wallet application 14 on the mobile terminal device 1.

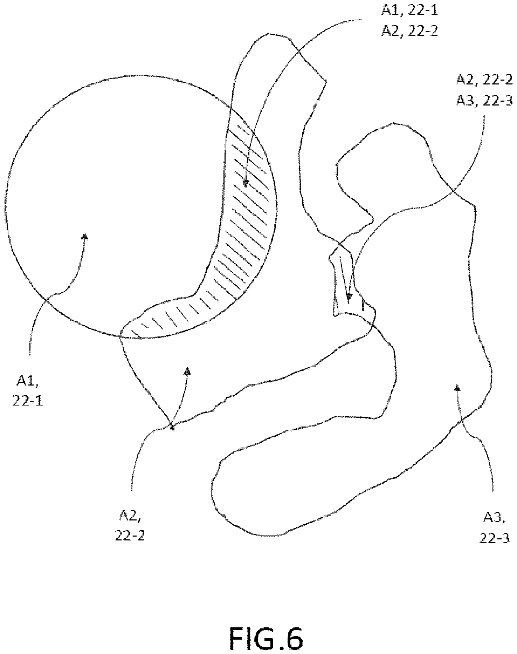

Fig.6 shows an example of defaulting card applications in different areas A1, A2, A3 with different applicable card applications in accordance to the present invention. The card applications 22-1, 22-2 and 22-3 may be installed on the secure element 12 of the mobile terminal device 1, where card application 22-1 is assigned to area A1, card application 22-2 is assigned to area A2 and card application 22-3 is assigned to area A3 as registered on the wallet server 43. If the geographic location of the mobile terminal device 1 is recognized RGL in area A1, the wallet application will receive information about the usability of card applications 22-1 at this geographic location leading to an automatic defaulting of card application 22-1 as the default card application 22-D. If the geographic location of the mobile terminal device 1 is recognized RGL in area A2, the wallet application will receive information about the usability of card applications 22-2 at this geographic location leading to an automatic defaulting of card application 22-2 as the default card application 22-D. If the geographic location of the mobile terminal device 1 is recognized RGL in area A3, the wallet application will receive information about the usability of card applications 22-3 at this geographic location leading to an automatic defaulting of card application 22-3 as the default card application 22-D. In case of recognizing the geographical position RGL of the mobile terminal device 1 in the overlapping area of areas A1 and A2 (dashed overlapping area) the default card application could be either card application 22-1 or card application 22-2. In this case the wallet application 14 displays a list enabling to select either card application 22-1 or card applications 22-2 as the default card application 22-D. In case of recognizing the geographical position RGL of the mobile terminal device 1 in the overlapping area of areas A2 and A3 (dashed overlapping area) the default card application could be either card application 22-2 or card application 22-3. In this case the wallet application 14 displays a list enabling to select either card application 22-2 or card applications 22-3 as the default card application 22-D. In case of the mobile terminal device leaves area A1 and enters area 2, any defaulted card application 22-1 will be replaced by the new defaulted card-application 22-2 via the wallet application 14 a described above

While the invention has been illustrated and described in details in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference sign in the claims should not be construed as limiting the scope.

### List of reference signs

- 1: mobile terminal device
- 11: near field communication module (NFC module)
- 12: secure element, e.g. a SIM card
- 13: data connection connecting secure element and NFC module
- 14: wallet application
- 15: display
- 16: telecommunication module
- 17: antenna
- 2: card application system
- 21: external near field communication reader (NFC reader)
- 22: card application
- 22-1: card application 1 applicable in area 1
- 22-2: card application 2 applicable in area 2
- 22-3: card application 3 applicable in area 3
- 22-A: card application applicable at a certain geographic location
- 22-D: default card application
- 3: satellite based positioning system
- 4: wallet system
- 41: backend system
- 42: database
- 43: wallet server

- A1: area 1, where card application 1 is applicable
- A2: area 1, where card application 1 is applicable
- A3: area 1, where card application 1 is applicable
- ALL: allowance granted to a trusted provider by the wallet server to insdtall card application on a mobile terminal device
- CAD: database recieves card application data from wallet server
- DAL: list of applicable card applications
- E: executing the invoked default application
- EWC: establishing a wireless connection to a backend system
- GL: geographic location
- IN: invoking the default card application
- Q: query sent-out by the wallet application
- Q-p: previous sent-out query
- PD: position data from satellite positioning systems
- PR: mobile terminal device in proximity to NFC reader
- R: receive information about usability of card applications
- RC: recognize change of geographic location
- RE: register applicable card application on wallet server
- RGL: geographic location recognized by the wallet application
- S: automatically selecting default card application by the wallet application
- ST: starting of the wallet application
- SU: selecting default card application by the user in case of more than one applicable card application
- T: transaction
- TR: trusted provider
- U: user of the mobile terminal device
- UCA: usability of card applications at a certain geographical location

## Claims

1. A mobile terminal device (1) comprising a near field communication module (11) suitable to perform a NFC based transaction (T) with a corresponding external near field communication reader (21) and a secure element (12) coupled at least to the near field communication module (11) and adapted to securely execute multiple card applications (22) associated with different card accepting systems (2), where one of the card applications (22) being invoked by the near field communication module (11), and a wallet application (14) executable on the mobile terminal device (1), where the wallet application (14) is adapted to recognize the geographic location (RGL) of the mobile terminal device (1) independently of any presence of an external near field communication reader (21) and any user interaction and in response to the recognized geographic location (RGL) to automatically select (S) one of the card applications (22) acceptable for the associated card accepting systems (2) at this geographical location (GL) as a default card application (22-D) or in case of at least two of the multiple card applications (22) applicable at this geographical location to display a list (DAL) of the applicable card applications (22-A) to enable a user (U) of the mobile terminal device (1) to select (SU) one of the displayed card applications (22-A) as the default card application (22-D).

2. The mobile terminal device (1) as claimed in claim 1, where the secure element (12) comprises a storage memory to store the card applications (22) and a processor to execute the card applications (22), preferably secure element (12) is a smartcard, a Universal Integrated Circuit Card, a SIM card, a SD-card or an embedded secure smart chip.

3. The mobile terminal device (1) as claimed in claim 1 or 2, where the near field communication module (11) is adapted to invoke (IN) the default card application (22-D) on the secure element (12) in case of an active near field communication reader (21) being in proximity (PR) of the mobile terminal device (1) according to the default selection.

4. The mobile terminal (1) as claimed in any of the preceding claims, where the mobile terminal (1) comprises a telecommunication module (16) to establish a wireless connection (EWC) to a backend system (41) with a database (42) comprising information about the usability (UCA) of card applications (22) at a certain geographic location (GL), and the wallet application (14) is adapted so send a query (Q) to the database (42) in response to the recognized geographic location (RGL) to receive (R) information about the usability (UCA) of card applications (22-A) at the recognized geographic location (RGL).

5. The mobile terminal (1) as claimed in claim 4, where the query (Q) comprises information about the card application (22) present on the secure element (12).

6. The mobile terminal (1) as claimed in claim 4 or 5, where the query (Q) is sent only in response of recognizing a change (RC) of the geographic location with respect to the recognized geographic location (RGL), where the previous query (Q-p) is sent.

7. The mobile terminal (1) as claimed in claim 4 or 5, where starting of the wallet application (14) triggers sending out the query (Q) after recognizing the geographical position (RGL).

8. The mobile terminal (1) as claimed in any of the preceding claims, where each of the card application (22) is associated with at least a payment systems, credit card systems, booking systems, or access systems as the card accepting systems (2).

9. A wallet system (4) to perform a NFC based transaction comprising at least one a mobile terminal device (1) as claimed in claim 1 and a backend system (41) comprising a database (42) comprising information about the usability (UCA) of card applications (22-A) at a certain geographic location (GL), where the mobile terminal device (1) comprises a telecommunication module (16) to establish a wireless connection (EWC) to the backend system (41), and the wallet application (14) is adapted so send a query (Q) to the database (42) in response to the recognized geographic location (RGL) to receive (R) information about the usability (UCA) of card applications (22-A) at the recognized geographic location (RGL).

10. The wallet system (4) as claimed in claim 9, further comprising a wallet server (43) to register (RE) applicable card applications (22) and being connected to the database (42) in order to provide card application data (CAD) to the database (42) comprising a correlation between card application (22) and a geographical area (GA), where the card application (22) is accepted by the associated card accepting systems (2).

11. A method to perform a NFC based transaction via card applications (22) applicable for card accepting systems (2) executed on a secure element (12) in a mobile terminal device (1) as claimed in claim 1 comprising the steps of
- Recognizing the geographic location (RGL) of the mobile terminal device (1) by a wallet application (14) executed on a processor of the mobile terminal device (1) independently of any presence of an external near field communication reader (21) and any user interaction,
- in response to the recognized geographic location (RGL) automatically selecting (S) one of the card applications (22) applicable for the card accepting systems (2) present at this geographical location (GL) as a default card application (22-D), or
- in case of at least two of the multiple card applications (22-A) applicable at this geographical location (GL) displaying (DAL) a list of the applicable card applications (22-A) and selecting (SU) one of the displayed card applications (22-A) as the default card application (22-D) by a user (U) of the mobile terminal device (1),
- invoking (IN) the default card application (22-D) by a near field communication module (11) of the mobile terminal device (1) coupled to the secure element (12), and
- executing (E) the invoked default card application (22-D) on the secure element (12) enabling the near field communication module (11) to perform a transaction (T) with a corresponding external near field communication reader (21) requesting the transaction (T).

12. The method according to claim 11, where the method further comprises the step of invoking (IN) the default card application (22-D) on the secure element (12) according the default selection is executed in case of an active near field communication reader (21) being in proximity (PR) of the mobile terminal device (1).

13. The method according to claim 11 or 12, where the method further comprises the steps of
- establishing a wireless connection (EWC) to a backend system (41) of a wallet system (4) as claimed in claim 9 with a database (42) comprising information about the usability (UCA) of card applications (22) at a certain geographic location (GL),
- sending a query (Q) to the database (42) by the wallet application (14) in response to the recognized geographic location (RGL) to receive (R) information about the usability (UCA) of card applications (22-A) at the recognized geographic location (RGL), and
- receiving (R) information about the usability (UCA) of card applications (22-A) at the recognized geographic location (RGL) from the backend system (4), and
- using the received information to select (S, SU) one of the card applications (22) as the default application (22-D).

14. The method according to claim 13, where the query (Q) is sent in response of recognizing a change (RC) of the geographic location with respect to the recognized geographic location (RGL), where the previous query (Q-s) is sent, or starting (ST) of the wallet application (14) triggers sending out the query (Q) after recognizing the geographical position (RGL).

15. The method according to any of claims 11 to 14, where the wallet application (14) is transmitted to the mobile terminal device (1) from a wallet server (43) arranged in the backend system (41) comprising a registration (RE) of card applications (22) being applicable at the mobile terminal (1).
